# EUROPÄISCHE PATENTANMELDUNG

(11) **EP 4 002 026 A1**
(43) Veröffentlichungstag der Anmeldung: **25.05.2022**
(21) Anmeldenummer: 20209242.5
(22) Anmeldetag: 23.11.2020
(51) Int. Cl.: G05B 19/05

(54) **VERFAHREN, PROGRAMMIERSYSTEM UND COMPUTERPROGRAMMPRODUKT ZUR PROGRAMMIERUNG EINES AUTOMATISIERUNGSSYSTEMS MITTELS EINER CAUSE-EFFECT-MATRIX**

(71) Anmelder: Siemens Aktiengesellschaft, 80333 München (DE)
(72) Erfinder: Ebert, Birgit, 76287 Rheinstetten (DE); Wolf, Elena, 90480 Nürnberg (DE); Bergner, Bernd, 91336 Heroldsbach (DE); Kolb, Jürgen, 90530 Wendelstein (DE); Schaer, Stephan, 90453 Nürnberg (DE); Schröder, Christian, 90409 Nürnberg (DE); Uher, Marco, 90491 Nürnberg (DE)

(57) **Zusammenfassung**

Die Erfindung betrifft ein Verfahren zur Programmierung eines Automatisierungssystems mittels einer Cause-Effect-Matrix (CEM), wobei in der Cause-Effect-Matrix (CEM) mittels Operatoren (2N, 3N, 2S, R) einer Aktionsgruppe in einem Zweig eine Mehrzahl von Eingangsbedingungen als Causes mit zumindest einem Ausgangswert einer Ausgangsvariablen (#Output_1) verknüpft werden, und wobei ein Automatisierungsprogramm aus der somit definierten oder geänderten Cause-Effect-Matrix (CEM) erstellt und für das Automatisierungssystems bereitgestellt wird. Dabei werden mehrere Aktionsgruppen (G1, G2) aus zumindest zwei Spalten mit der zumindest einen Ausgangsvariablen (#Output_1) verknüpft werden. Die Programmierung erfolgt direkt und ist somit durch eine übersichtlichere Darstellung des direkten Zusammenhangs zwischen den einflussnehmenden Causes auf den Effekt für den Benutzer intuitiver. Die Berechnung des Einflusses der Causes auf den Effekt kann zur Laufzeit im selben Zyklus erfolgen, was Vorteile bezüglich der Geschwindigkeit und der Logik des Programmablaufs bewirkt.

## Beschreibung

In industriellen Automatisierungssystemen werden Steuerungen (z.B. PLC - Programmable Logic Controller) oder andere Computer mit industriellen Automatisierungsprogrammen verwendet, wobei in den Automatisierungsprogrammen Variablen oder sog. "Tags" mittels einer definierten Logik miteinander verknüpft oder verschaltet sind. Letztlich werden Eingangsvariablen oder -signale mit Ausgangsvariablen oder -schnittstellen verschaltet, so dass ein industrieller Prozeß oder Vorgang, der mit Sensoren überwacht wird, mittels Aktoren gesteuert oder kontrolliert wird.

Zur Erstellung der Automatisierungsprogramme werden Editoren oder sog. Engineeringsysteme eingesetzt, die regelmäßig mittels industrieller Programmiersprachen (z.B. Kontaktplan KOP, Funktionsplan FUP, Anweisungsliste AWL, Strukturierter Text ST) programmiert werden; auch der Einsatz anderer, allgemeiner Programmiersprachen wie C#, C++, Turbo Pascal etc. ist gebräuchlich, insbesondere bei PC-basierten System.

Daneben wird die Logik inzwischen häufig mittels einer Ursache-Wirkungs-Matrix definiert, in der Eingangsbedingungen oder -signale, sog. "Causes", mit Ausgangswerten oder - signalen, sog. Effekten oder gebräuchlich "Effects", logisch miteinander verknüpft sind; aus dem englischen Sprachgebrauch hat sich für dieses Programmier-Paradigma der Begriff "Cause-Effect-Matrix", kurz "CEM", durchgesetzt. In CEM hat der Anwender die Möglichkeit, ein oder mehrere Causes über sog. Intersektionen (meist in der englischen Schreibweise "Intersections" verwendet), zu verschalten und das Verknüpfungsergebnis auf einen oder mehrere Effects zu schalten. Einer Intersection, also einem Verknüpfungs-Operator, kann eine der folgenden Aktionen zugeordnet werden:
- 'N' - schaltet den Effekt auf das Ergebnis des Causes
- 'S' - setzt den Effekt speichernd auf 1 ('Set")
- 'R' - setzt den Effekt speichernd auf 0 ("Reset")

Innerhalb einer Intersection-Spalte hat der Anwender die Möglichkeit, Aktionsgruppen (kurz: Gruppen) zu erstellen. Die Gruppen sind durch eine Zahl und eine Aktion gekennzeichnet (z. B. 2N, 3R, 4S) Die Zahl in der Aktionsgruppe, also 2 in '2N' oder 3 in '3N', gibt an, wie viele der Eingangssignale in der Gruppe mindestens logisch "1" (oder "TRUE") sein müssen, damit die gesamte Aktionsgruppe logisch "1" oder "TRUE" ist.

### Beispiele:

- Enthält eine Spalte 2 Intersections mit der Aktion "2N", müssen beide Intersections "TRUE" sein, damit die Gruppe "TRUE" wird.
- Enthält eine Spalte vier Intersections mit der Aktion "2N", müssen zwei der vier Intersections "TRUE" sein, damit die Gruppe "TRUE" wird ("2 aus 4"-Verknüpfung).

Enthält eine Spalte mehrere Aktionsgruppen, werden die einzelnen Gruppen generellmittels einer ODER-Verknüpfung auf den zugeordneten Effect verschaltet.

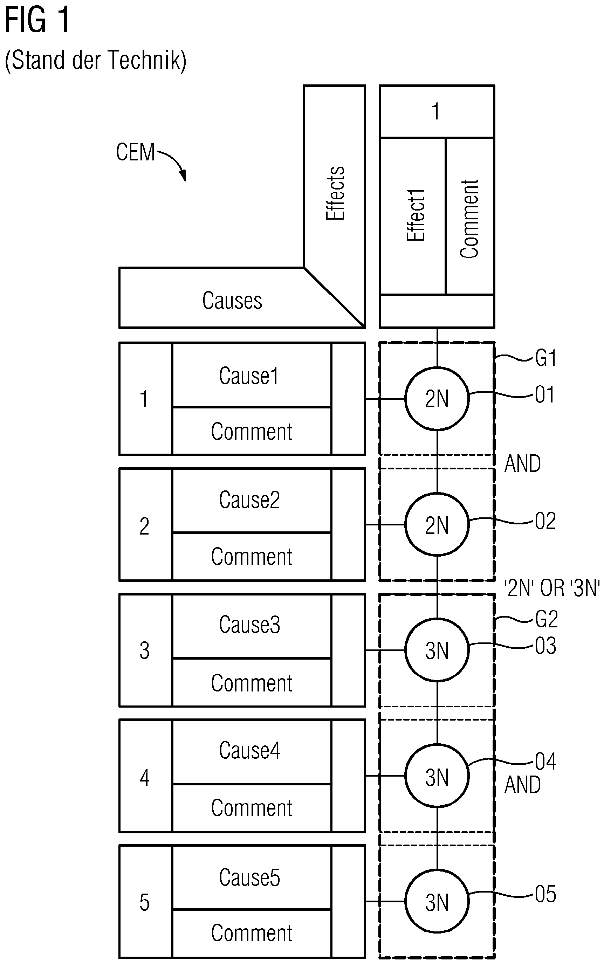

Die Figur 1 verdeutlicht dies:
Die Intersection-Spalte enthält zwei Gruppen ("2N" und "3N"). Da beide Gruppen in derselben Spalte liegen, sind sie durch ODER verknüpft.

Im aktuellen Stand der Technik ist es jedoch nicht möglich, zwei Gruppen, die dieselbe Aktion und Nummer haben, durch ODER zu verknüpfen.

### Beispiel:

Es ist nicht möglich, zwei unterschiedliche "2N"-Gruppen in einer Spalte zu erzeugen, da das System alle "2N"-Aktionen einer Spalte zu einer Gruppe zusammenfasst. Das Ergebnis wäre eine "2N"-Gruppe mit vier Elementen, also eine "2 aus 4"-Verknüpfung.

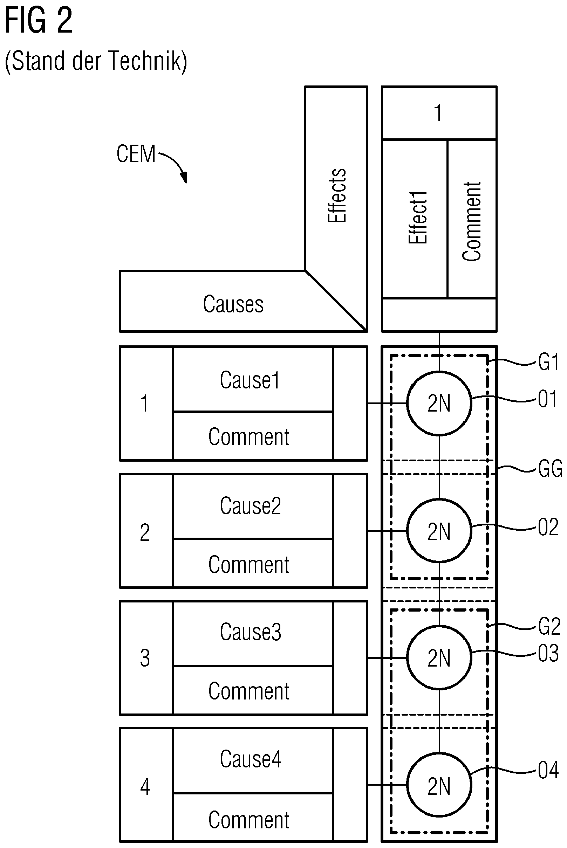

Dies ist in der Figur 2 dargestellt:
Der Anwender möchte 2 Gruppen, also Gruppe 1 aus Cause1 und Cause2, und Gruppe 2 aus Cause3 und Cause4 bilden. In jeder Gruppe sollen wegen der Aktion "2N" beide Eingänge (Cause1 und Cause2 bzw. Cause3 und Cause4) "TRUE" (logisch 1 oder wahr) sein, um die jeweilige Gruppe logisch "TRUE" zu schalten. Gleichzeitig soll es wegen der "Ver-ODERung" der Gruppen 1 und 2 ausreichen, wenn eine der beiden Gruppen "TRUE" ist, um Effectl zu schalten. Jedoch würde der Editor die 4 Aktionen "2N" zum Anlass nehmen, nur eine einzige Gruppe GG (Gesamt-Gruppe) aus allen vier Causes Cause1, ..., Cause4 zu bilden. Es würde eine "2 aus 4"-Verknüpfung entstehen, bei der es ausreicht, wenn zwei der vier Causes (die nicht beide aus Gruppe 1 oder Gruppe 2 stammen müssen) "TRUE" sind, um Effectl zu schalten.

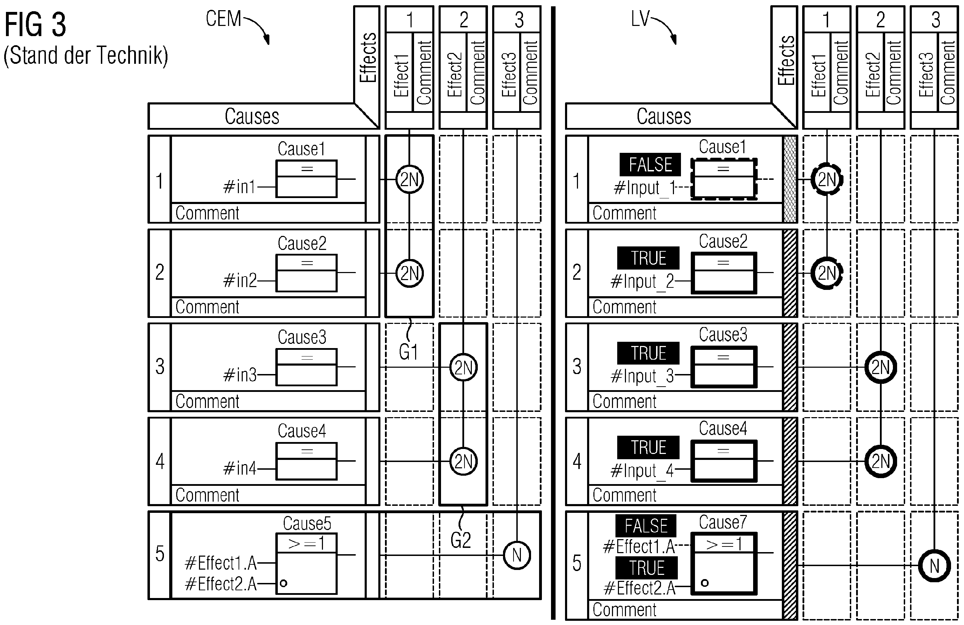

Das Problem kann wie in der Figur 3 gezeigt mit Hilfe zusätzlicher Effekte und eines zusätzlichen Causes gelöst werden, was zu einer weiteren Spalte in der CEM führt. Dazu wird jede Aktionsgruppe, welche ODER-verknüpft werden soll, einem eigenen Effekt zugeordnet - in der Figur 3 sind das '*Effect1*' und '*Effect2*'. Das Verknüpfungsergebnis der jeweiligen Effekte '*Effect1. A*' und *,Effect2.A'* werden in einem zusätzlichen Cause '*Cause5*' an eine ODER-Funktion verschaltet. Dessen Verknüpfungsergebnis wird dem Effekt '*Effect3*' zugewiesen. In der Figur 3 ist auf der linken Seite die CEM zum Zeitpunkt der Programmierung gezeigt, und auf der rechten Seite finden sich die sog. "Online-Ansicht" (auch als "Live View - LV" bezeichnet), also eine Ansicht zur Laufzeit mit Beispielwerten für die logischen Zustände der Eingänge (Causes) und der resultierende Ergebnisse (Effects).

Nachteilig ist an diesem Vorgehen, dass es zum Einen zu einer unübersichtlichen Darstellung führt, zum anderen aber durch den zusätzlichen Effekt und dem damit erforderlichen zusätzlichen Zweig die Verknüpfung der "Zwischen-Effekte" erst im nächsten Zyklus des Programms erfolgt und damit eine ungewünschte Verzögerung auftritt. Außerdem wird damit der Variablenhaushalt des Programms unnötig vergrößert.

Es ist daher eine Aufgabe der vorliegenden Erfindung, die Programmierung von Automatisierungssystemen mittels Cause-Effekt-Matrizen (CEM) zu verbessern.

Mit der erfindungsgemäßen Möglichkeit, mehrere, parallele Spalten von Intersections einem Effekt zuzuordnen, entfällt für den Anwender die Rückführung der Effekt-Verknüpfungsergebnisse in einem eigenen Cause. In jeder Spalte können eigenständige Aktionsgruppen gebildet werden. Die Ergebnisse in den zwei oder mehr Spalten werden also auf einen gemeinsamen Effekt geführt, der die Ergebnisse mittels einer ODER-Operation verknüpft; diesbezüglich umfasst der Effekt selbst also eine logische Operation, nämlich eine Mehrspalteneffekt-Operation.

Die Aufgabe wird insbesondere durch ein Verfahren nach Patentanspruch 1 und durch ein Programmiersystem nach Patentanspruch 5 gelöst; das Verfahren und das Programmiersystem können durch ein Computerprogrammprodukt realisiert werden, welches auf einem Computer installiert und zur Ausführung gebracht wird.

Dabei wird ein Verfahren zur Programmierung eines Automatisierungssystems mittels einer Cause-Effect-Matrix vorgeschlagen, wobei in der Cause-Effect-Matrix mittels Operatoren als Intersections einer Aktionsgruppe in einer Spalte eine Mehrzahl von Eingangsbedingungen (z.B. Eingangsvariablen) als Causes mit zumindest einem Ausgangswert (z.B. Ausgangsvariablen) als Effekt verknüpft werden, und wobei ein Automatisierungsprogramm aus der somit definierten oder geänderten Cause-Effect-Matrix erstellt und für das Automatisierungssystem bereitgestellt wird. Dabei werden mehrere Aktionsgruppen aus zumindest zwei Spalten mit dem zumindest einen Ausgangswert (Ausgangsvariablen) verknüpft. Die Programmierung erfolgt direkt und ist somit durch eine übersichtlichere Darstellung des direkten Zusammenhangs zwischen den einflussnehmenden Causes auf den Effekt für den Benutzer intuitiver, und zwar sowohl bei der Programmierung (offline) als auch zur Laufzeit (Online-Ansicht; Live-View) in einer Status-Sicht. Die Berechnung des Einflusses der Causes auf den Effekt kann zur Laufzeit im selben Zyklus erfolgen, was Vorteile bezüglich der Geschwindigkeit und der Logik des Programmablaufs bewirkt.

Die Aufgabe wird außerdem durch ein Programmiersystem zur Programmierung eines Automatisierungssystems mittels einer Cause-Effect-Matrix gelöst, mit einem Programme-Editor zur Darstellung und Bearbeitung der Cause-Effect-Matrix, wobei das Programmiersystem derart eingerichtet ist, dass in der Cause-Effect-Matrix mittels Aktionen (als "Intersections") einer Aktionsgruppe in einer Spalte eine Mehrzahl von Eingangsbedingungen als Causes mit zumindest einem Ausgangswert bzw. einer Ausgangsvariablen als Effect verknüpft werden, und wobei ein Automatisierungsprogramm aus der somit definierten oder geänderten Cause-Effect-Matrix erstellt und für das Automatisierungssystem bereitgestellt wird. Dabei ist das Programmiersystem weiter derart eingerichtet, dass mehrere Aktionsgruppen aus zumindest zwei Spalten mit der zumindest einen Ausgangsvariablen verknüpft werden. Mit diesem Programmiersystem können die bereits anhand des Verfahrens diskutierten Vorteile erreicht werden.

Vorteilhafte Ausgestaltungen der Erfindung sind in den abhängigen Patentansprüchen angegeben. Die dabei beschriebenen Merkmale und deren Vorteile können sowohl einzeln als auch in sinnfälliger Kombination miteinander realisiert werden.

Vorteilhaft erfolgt die Auswertung der Aktionsgruppen in den Spalten und die Auswertung der Verknüpfung aus den zumindest zwei Spalten in einem gemeinsamen Zyklus eines damit definierten Automatisierungsprogramms des Automatisierungssystems. Das hat zum Vorteil, dass trotz der spaltenüberschreitenden Verknüpfung das Gesamtergebnis der Operation noch in demselben Zyklus feststeht und dort auch weiterverarbeitet werden kann.

In einer vorteilhaften Ausgestaltung erfolgt die Verknüpfung der mehreren Aktionsgruppen aus den zumindest zwei Spalten mittels eines Mehrspalten-Operators für die zumindest zwei Effekte-Spalten mit den Aktionsgruppen in der Cause-Effect-Matrix. Somit wird als Deskriptor in der Effekte-Spalte bzw. deren Kopfzeile nicht nur eine Ausgangsvariable definiert, sondern eine logische Operation (in der Regel eine logische Oder-Operation). Durch diesen Operator in der Kopfzeile der Effekte kann eine beliebige Anzahl von Spalten mit Aktionsgruppen in übersichtlicher Weise logisch miteinander verknüpft werden, so dass diese logische Operation in demselben Zyklus eines zyklenorientierten Automatisierungsprogramms ausgewertet werden kann, wie die Logik in den beteiligten Aktionsgruppen. In diesem Mehrspalten-Operator kann erfindungsgemäß die Art der Logik der Verknüpfung spezifiziert werden. Entfällt eine solche Spezifizierung, kann als Konvention vereinbart sein, dass es sich um eine Oder-Verknüpfung handelt. Andere Konventionen sind möglich.

Ausführungsbeispiele des erfindungsgemäßen Verfahrens und des erfindungsgemäßen Programmiersystems bzw. Computerprogrammproduktes werden nachfolgend anhand der Figuren erläutert.

Dabei zeigen:
- Figuren 1 - 3: die Programmierung einer Cause-Effect-Matrix (CEM) gemäß dem Stand der Technik,
- Figur 4: die erfindungsgemäße Umsetzung des Verfahrens zur Programmierung einer CEM anhand des Beispiels aus der Figur 3 (Stand der Technik), und
- Figur 5: eine Anwendung der S-R-Logik in Parallelzweigen.

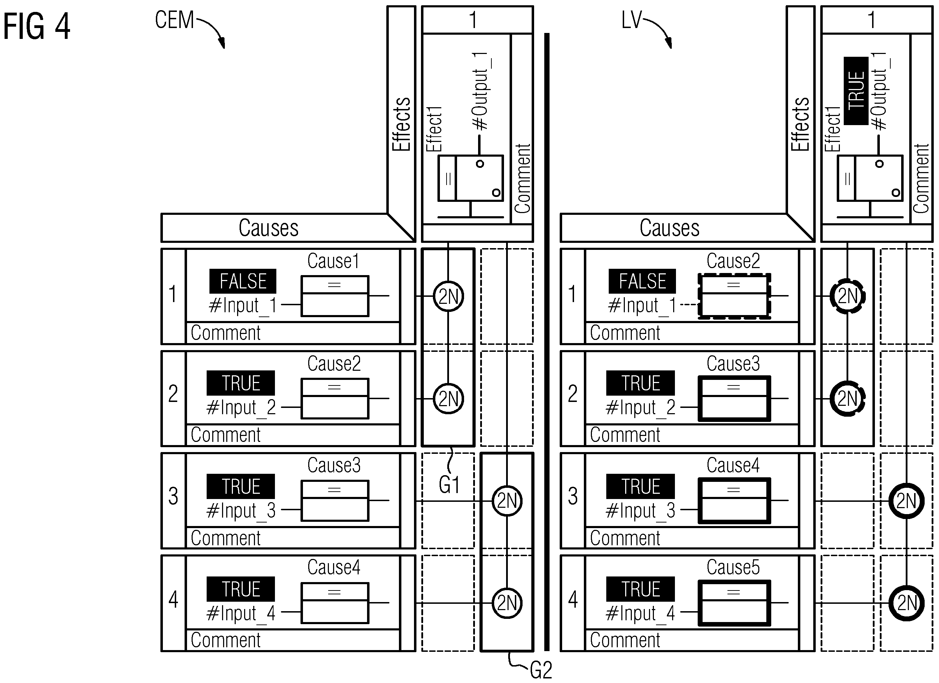

Die Figur 4 zeigt die Verwendung von Intersection-Zweigen, also in der abgebildeten Cause-Effect-Matrix CEM mehrere Spalten mit Operatoren 2N, die auf einen gemeinsamen Effekt Effect 1 geschaltet sind. Dabei ist auf der linken Seite der Figur 4 die Cause-Effect-Matrix CEM gezeigt, wie sie sich zum Programmierzeitpunkt darstellt, und auf der rechten Seite ist eine sogenannte Online-Ansicht LV ("Live View") gezeigt, in der die logischen Zustände der Eingänge #Input_1, ... #Input_4 und des Ausgangs #Output_1 dargestellt sind; die entsprechenden Zustände sind TRUE und FALSE. Während im Stand der Technik am Beispiel der Figur 3 die Ergebnisse der Aktionsgruppen G1 und G2 als Zwischenergebnisse #Effect1.A, #Effect2.A die Eingangssignale eines eigenen Bedingungsblocks Cause5 bilden, der dann auf den Effekt Effect3 als Endergebnis geführt ist, findet nun die Ver-ODERung der Ergebnisse aus den Aktionsgruppen G1 und G2 direkt in der Effekte-Kopfzeile mittels eines Mehrspalten-Operators im Block Effectl statt, wobei die beiden Ergebnisse aus den Zweigen mit den Aktionsgruppen G1 und G2 direkt zum Ergebnis #Output_1 verrechnet werden. Dabei ist zu bemerken, dass beim Fehlen einer anderen Auswahl diese letztgenannte Verknüpfungsoperation stets ein logisches "Oder" ist.

Auf der rechten Seite der Figur 4 ist die Ansicht derselben Matrix zur Laufzeit - Online-Ansicht LV - gezeigt, wobei die Eingangssignale der Bedingungen Cause2, ... Cause4 entweder "TRUE" oder "FALSE" sind, wobei aufgrund des Zustandes "FALSE" die Aktionsgruppe G1 insgesamt ein Zwischenergebnis "FALSE" liefert, während die Aktionsgruppe G2 insgesamt "TRUE" ergibt, so dass das Gesamtergebnis #Output_1 der Oder-Operation im Mehrspalten-Operator der Kopfzeile (Effect1) ein "TRUE" ist.

Die Figur 4 zeigt also die Verwendung von Intersection-Zweigen, also in der abgebildeten Matrix mehrere Spalten mit Operatoren, in einem (gemeinsamen) Effekt. Durch die Verwendung mehrerer Intersection-Spalten in einem Effekt mittels des Mehrspalten-Operators ist es für den Anwender intuitiv, seine Causes und Effects in der gewünschten Logik übersichtlich und lesbar zu verschalten. Der Mehrspalten-Operator verknüpft die Spalten regelmäßig mittels einer ODER-Operation, wenn nichts anderes spezifiziert wird. Andere Konventionen (beispielsweise eine UND-Verknüpfung als "Default") sind möglich.

Eine Besonderheit gibt es bei der Verwendung der Aktionen 'S' und 'R' ("Set", "Reset") in den Intersections der Spalten eines Effects. Die Aktionen 'S' und 'R' sollten immer paarweise in einem Intersection-Zweig (Spalte) verwendet werden, damit die S-R-Logik den Effekt erwartungsgemäß schaltet. Dabei gilt erfindungsgemäß, dass die 'R'-Aktion nicht im Zweig der 'S'-Aktion verwendet werden muss.

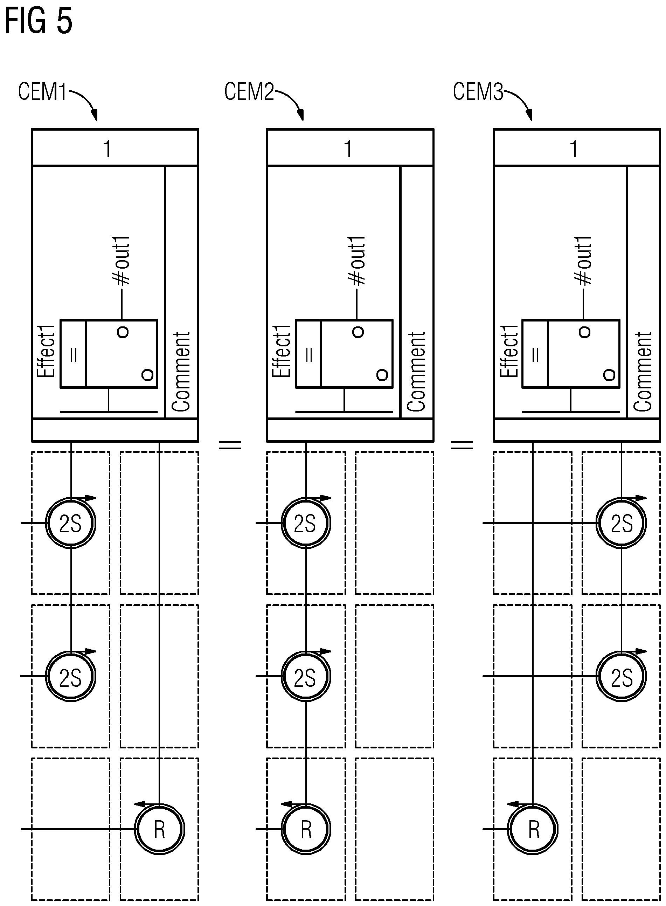

Wie in der Figur 5 dargestellt, kann durch die Verknüpfung der Aktionsgruppen oder Aktionen aus zwei oder mehr Zweigen (Spalten) mittels des Mehrspalten-Operators in der Effekte-Kopfzeile der Benutzer zwischen mehreren äquivalenten Darstellungen der Cause-Effect-Matrix bei gleichem logischem Verhalten wählen. Die drei "Causes" als Eingangssignale entsprechen beispielsweise den Causes Cause1, ..., Cause 3 der Figuren 1-4 und sind aus Gründen der Übersichtlichkeit nicht dargestellt. Die dargestellten Effekte Effect1, Effect2, Effect3 haben dabei durch die ODER-Verschaltung der beiden dargestellten Zweige (Spalten) stets dasselbe Verhalten, denn der Reset-Operator "R" wirkt nunmehr zweig-übergreifend bzw. spalten-übergreifend, sofern die entsprechenden Zweige bzw. Spalten durch den Effekte-Operator Effectl (Mehrspalten-Operator) miteinander verknüpft sind. Natürlich können in anderen Beispielen mittels des Mehrspalten-Operators auch mehr als 2 Spalten miteinander verknüpft werden.

Schließlich wird von einem Engineering-System die mit der Cause-Effect-Matrix definierte Logik in ein Automatisierungsprogramm umgesetzt, welches zu einer Ausführungseinheit (i.d.R. eine Speicherprogrammierbare Steuerung oder dgl.) übertragen und dort zur Ausführung gebracht wird, so dass damit ein industrieller Vorgang gesteuert wird.

Aus der Verwendung von Parallelzweigen (Parallel-Spalten), die zu einem Effekt gehören, anstelle der Verwendung von zusätzlicher Logik für die Auswertung der Kombination ergeben sich einige Vorteile. Die Programmierung erfolgt direkt und ist somit für den Benutzer intuitiver. Die Darstellung des direkten Zusammenhangs zwischen den einflussnehmenden Causes auf den Effekt sowohl offline als auch ONLINE im Status (Online-Ansicht) ist übersichtlicher. Die Berechnung des Einflusses der Causes auf den Effect kann zu Laufzeit im selben Zyklus erfolgen. Zudem entfallen Zwischen-Variablen (wie #Effect1.A, #Effect1.B in der Figur 3).

## Patentansprüche

1. Verfahren zur Programmierung eines Automatisierungssystems mittels einer Cause-Effect-Matrix (CEM),
wobei in der Cause-Effect-Matrix (CEM) mittels Operatoren (2N) einer Aktionsgruppe in einer Spalte eine Mehrzahl von Eingangsbedingungen als Causes mit zumindest einem Ausgangswert einer Ausgangsvariablen (#Output_1) verknüpft werden, und
wobei ein Automatisierungsprogramm aus der somit definierten oder geänderten Cause-Effect-Matrix (CEM) erstellt und für das Automatisierungssystems bereitgestellt wird,
**dadurch gekennzeichnet,**
**dass** mehrere Aktionsgruppen (G1, G2) aus zumindest zwei Spalten mit der zumindest einen Ausgangsvariablen (#Output_1) verknüpft werden.

2. Verfahren nach Patentanspruch 1,
**dadurch gekennzeichnet,**
**dass** die Auswertung der Aktionsgruppen (G1, G2) in den Zweigen und die Auswertung der Verknüpfung aus den zumindest zwei Zweigen in einem Zyklus eines damit definierten Automatisierungsprogramms des Automatisierungssystems erfolgt.

3. Verfahren nach einem der vorhergehenden Patentansprüche,
**dadurch gekennzeichnet,**
**dass** die Verknüpfung der mehreren Aktionsgruppen (G1, G2) aus den zumindest zwei Zweigen mittels eines Mehrspalten-Operators für die zumindest zwei Effekte-Spalten mit den Aktionsgruppen (G1, G2) in der Cause-Effect-Matrix (CEM) erfolgt.

4. Verfahren nach Patentanspruch 3,
**dadurch gekennzeichnet,**
**dass** mit dem Mehrspalten-Operator die Art der Logik der Verknüpfung spezifiziert wird.

5. Programmiersystem zur Programmierung eines Automatisierungssystems mittels einer Cause-Effect-Matrix (CEM), mit einem Programme-Editor zur Darstellung und Bearbeitung der Cause-Effect-Matrix (CEM),
wobei das Programmiersystem derart eingerichtet ist, dass in der Cause-Effect-Matrix (CEM) mittels Operatoren als Intersections einer Aktionsgruppe (G1, G2) in einer Spalte eine Mehrzahl von Eingangsbedingungen als Causes mit zumindest einer Ausgangsvariablen (#Output_1) verknüpft werden, und
wobei ein Automatisierungsprogramm aus der somit definierten oder geänderten Cause-Effect-Matrix (CEM) erstellt und für das Automatisierungssystems bereitgestellt wird,
**dadurch gekennzeichnet,**
**dass** das Programmiersystem weiter derart eingerichtet ist,
**dass** mehrere Aktionsgruppen (G1, G2) aus zumindest zwei Spalten mit der zumindest einen Ausgangsvariablen (#Output_1) verknüpft werden.

6. Programmiersystem nach Patentanspruch 5,
**dadurch gekennzeichnet,**
**dass** vorgesehen ist,
**dass** die Auswertung der Aktionsgruppen (G1, G2) in den Spalten und die Auswertung der Verknüpfung aus den zumindest zwei Zweigen in einem Zyklus eines damit definierten Automatisierungsprogramms des Automatisierungssystems erfolgt.

7. Programmiersystem nach einem der Patentansprüche 5 oder 6,
**dadurch gekennzeichnet,**
**dass** vorgesehen ist,
**dass** die Verknüpfung der mehreren Aktionsgruppen (G1, G2) aus den zumindest zwei Spalten mittels eines Mehrspalten-Operators 2N für die zumindest zwei Effekte-Spalten mit den Aktionsgruppen (G1, G2) in der Cause-Effect-Matrix (CEM) erfolgt.

8. Programmiersystem nach Patentanspruch 7,
**dadurch gekennzeichnet,**
**dass** vorgesehen ist,
**dass** mit dem Mehrspalten-Operator die Art der Logik der Verknüpfung spezifiziert wird.

9. Computerprogrammprodukt zur Installation und Ausführung auf einem Computer,
**dadurch gekennzeichnet,**
**dass** das Computerprogrammprodukt zur Ausführung des Verfahrens gemäß Patentanspruch 1 ausgestaltet ist.
